# EUROPÄISCHE PATENTSCHRIFT

(11) **EP 0 845 378 B1**
(45) Veröffentlichungstag und Bekanntmachung des Hinweises auf die Patenterteilung: **24.10.2001**
(21) Anmeldenummer: 97120961.4
(22) Anmeldetag: 28.11.1997
(51) Int. Cl.: B60J 7/14

(54) **Dachaufbau für Fahrzeuge, insbesondere Personenkraftwagen**
Vehicle roof structure, especially for passenger vehicles
Structure de toit pour véhicule, en particulier pour véhicules passagers.

(30) Priorität: 30.11.1996 DE 19649751
(43) Veröffentlichungstag der Anmeldung: 03.06.1998
(73) Patentinhaber: CTS Fahrzeug-Dachsysteme GmbH, 21079 Hamburg (DE)
(72) Erfinder: Schlecht, Michael, 70839 Gerlingen (DE); Aydt, Matthias, 71665 Eberdingen (DE); Klein, Berthold, 71277 Ruteshausen (DE); Kaute, Markus, 71263 Weil der Stadt (DE); Raisch, Dieter, 71277 Rutesheim (DE)
(74) Vertreter: Müller, Gottfried

(56) Entgegenhaltungen:
- DE-C- 4 438 191
- US-A- 3 575 464

## Beschreibung

Die Erfindung betrifft einen Dachaufbau für Fahrzeuge, insbesondere Personenkraftwagen, gemäß dem Oberbegriff des Patentanspruchs 1.

Aus der DE-A-27 23 996 geht ein Dachaufbau für Personenkraftwagen hervor, der sich aus einem zwischen einem Windschutzscheibenrahmen und einem Überrollbügel erstreckenden vorderem Dachelement und einem sich an den Überrollbügel anschließenden hinteren Dachelement zusammensetzt. Das aus einem mit Sichtscheiben versehenen Rahmen bestehende hintere Dachelement ist mittels Scharniere drehbar am querverlaufenden oberen Abschnitt des Überrollbügels gelagert. Das mit Führungsrollen versehene vordere Dachelement ist unterhalb des Überrollbügels entlang von an den Seitenholmen des Überrollbügels und dahinter befindlichen gesonderten Seitenführungen nach hinten unter das hintere Dachelement verschiebbar und bei Erreichen einer Endlage um eine an seinem hinteren Ende befindliche Querachse nach vorn unten etwa bis in die Ebene eines Heckraumdeckels absenkbar. Bei zurückverlagertem vorderen Dachelement nimmt der Dachaufbau eine sogenannte Targastellung ein.

Dieser Anordnung haftet der Nachteil an, daß die Schiebeführungen an den Seitenholmen des Überrollbügels und den längsgerichteten Rahmenabschnitten des hinteren Dachelements einen aufwendigen Aufbau aufweisen und an beiden Längsseiten exakt parallel zueinander ausgerichtet sein müssen, um ein Verkanten des vorderen Dachelements bei der Verschiebebewegung zu vermeiden.

Der Erfindung liegt die Aufgabe zugrunde, einen Dachaufbau der eingangs genannten Gattung so weiterzubilden, daß das vordere Dachelement mittels vereinfachter Kinematik funktionssicher und schnell in den heckseitigen Aufnahmeraum unterhalb des hinteren Dachelements verlagerbar ist und umgekehrt.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die schwenkbare Anlenkung des hinteren Dachelements an seinem hinteren Endbereich oder an seitlichen Endbereichen und durch die Anordnung von je einem Lenkerpaar pro Längsseite für das vordere Dachelement eine einfache, funktionssichere Kinematik zur Verlagerung des vorderen Dachelements in den heckseitigen Aufnahmeraum geschaffen wird. Durch die einerseits mit dem vorderen Dachelement und andererseits mit dem feststehenden Aufbau gelenkig verbundenen Lenker der Lenkerpaare wird das vordere Dachelement bei hochgeschwenktem hinteren Dachelement über den Überrollbügel hinweg in den heckseitigen Aufnahmeraum verschwenkt.

Das hintere Dachelement umfaßt vorzugsweise eine von einem Rahmen umgebene, großflächige hintere Heckscheibe und einen etwa horizontal ausgerichteten Verdeckkastendeckel, der randseitig an die Heckscheibe angeschlossen ist. Heckscheibe und Verdeckkastendeckel bilden eine Baueinheit. Vorzugsweise ist an den Verdeckkastendeckel unterhalb der Heckscheibe eine Hutablage angeschlossen, die das abgelegte vordere Dachelement nach oben hin abdeckt. Das hintere Dachelement kann auch nur durch eine mit einem Rahmen versehene Heckscheibe gebildet werden.

Die schrägverlaufenden, einstückig mit den Seitenholmen des Überrollbügels verbundenen C-Säulenabschnitte versteifen die Fahrzeugstruktur bei einem Überschlag nochmals erheblich.

Eine gelenkig mit dem vorderen Rand des hinteren Dachelements verbundene Bügelabdeckung deckt in Schließstellung des hinteren Dachelements den oberen querverlaufenden Abschnitt des Überrollbügels ab; bei geschlossenem vorderen Dachelement werden zusätzlich die auf dem Überrollbügel aufliegenden Bereiche beider Lenkerpaare abgedeckt. Durch die schwenkbare Bügelabdeckung wird bei hochgeklapptem hinteren Dachelement die erforderliche Höhe zwischen Fahrbahn und Oberkante hinterem Dachelement reduziert. Es besteht aber auch die Möglichkeit, anstelle der schwenkbaren Bügelabdeckung das hintere Dachelement soweit nach vorne zu ziehen, daß es den oberen querverlaufenden Abschnitt des Überrollbügels und die am Überrollbügel aufliegenden Lenkerpaare abdeckt.

Ein Ausführungsbeispiel der Erfindung ist in der Zeichnung dargestellt und wird im folgenden näher erläutert.

Es zeigen
- Fig. 1: eine Teilseitenansicht auf eine erste Ausführungsform eines Dachaufbaus für einen Personenkraftwagen in Schließstellung,
- Fig. 2: eine Teilseitenansicht der ersten Ausführungsform des Dachaufbaus bei hochgeklapptem hinteren Dachelement und teilweise zurückgeschwenktem vorderen Dachelement,
- Fig. 3: eine Teilseitenansicht der ersten Ausführungsform des Dachaufbaus bei vollständig zurückgeklapptem vorderen Dachelement und geschlossenem hinteren Dachelement - Targastellung -,
- Fig. 4: eine perspektivische Teilansicht von hinten auf einen Personenkraftwagen mit einer zweiten Ausführungsform eines Dachaufbaus in Schließstellung,
- Fig. 5: eine Ansicht gemäß Fig. 4, jedoch bei hochgeklapptem hinteren Dachelement und teilweise zurückgeschwenktem vorderen Dachelement und
- Fig. 6: eine Ansicht entsprechend Fig. 4, jedoch mit abgelegtem vorderen Dachelement - Targastellung -.

Ein durch einen Personenkraftwagen 1 gebildetes Fahrzeug umfaßt im dargestellten Bereich einen feststehenden Aufbau 2 mit einem eine Windschutzscheibe 3 aufnehmenden Windschutzscheibenrahmen 4, seitliche Türen 5 mit in Höhenrichtung bewegbaren Türfensterscheiben 6 und einen den Fahrgastraum 7 in Querrichtung überspannenden, feststehenden Überrollbügel 8. Der Überrollbügel 8 ist mit seinem vorderen Rand an die hintere aufrechte Begrenzungskante der Türfensterscheibe 6 herangeführt und setzt sich aus zwei aufrechten Seitenholmen 9 und einem oberen querverlaufenden Abschnitt 10 zusammen, der die beiden seitlich außenliegenden Seitenholme 9 miteinander verbindet. Innerhalb des Fahrgastraumes 7 sind vordere Sitze 11 und hintere Sitze 12 angeordnet.

Oberhalb einer Gürtellinie 13 des Aufbaus 2 ist ein Dachaufbau 14 vorgesehen, der sich aus einem vorderen Dachelement 15 und einem hinteren Dachelement 16 zusammensetzt. Das vordere, vorzugsweise formsteif ausgebildete Dachelement 15 erstreckt sich in seiner Schließstellung A zwischen dem Windschutzscheibenrahmen 4 und dem feststehenden Überrollbügel 8 und ist über zumindest einen nicht näher dargestellten Verschluß lösbar am Windschutzscheibenrahmen 4 in Lage gehalten. Ferner kann das vordere Dachelement 15 über einen weiteren nicht näher gezeigten Verschluß auch mit dem Überrollbügel 8 lösbar verbunden sein.

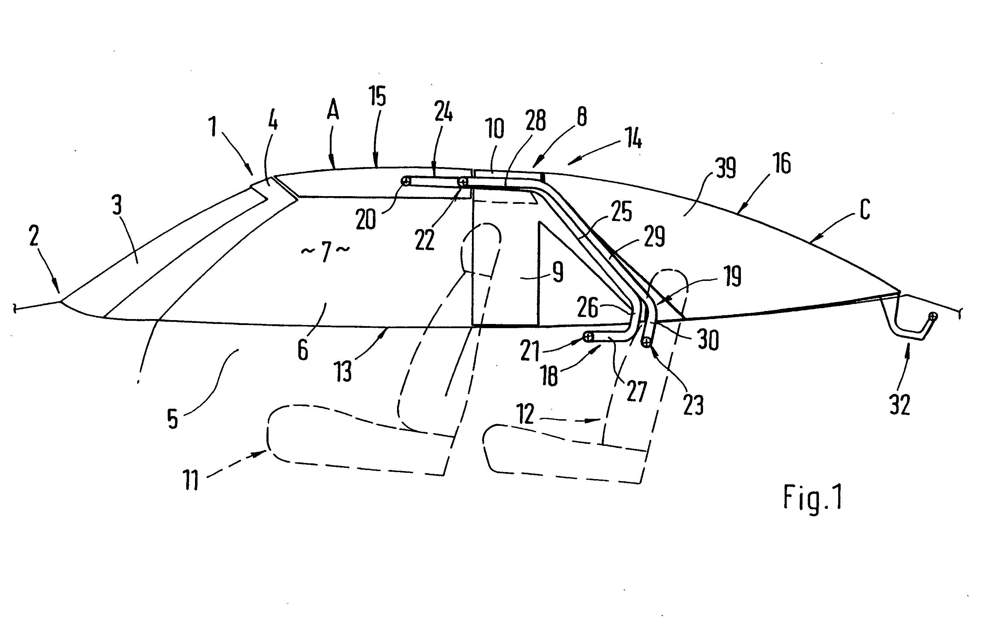

Gemäß den Fig. 1 bis 3 ist das vordere Dachelement 15 an seinen beiden Längsseiten über je ein Lenkerpaar 17 gelenkig mit dem feststehenden Aufbau 2 verbunden. Jedes Lenkerpaar 17 setzt sich aus einem ersten Lenker 18 und einem zweiten Lenker 19 zusammen. Der erste Lenker 18 ist bei 20 mit dem vorderen Dachelement und bei 21 mit dem feststehenden Aufbau 2 gelenkig verbunden. Der zweite Lenker 19 ist bei 22 mit dem vorderen Dachelement 15 und bei 23 mit dem feststehenden Aufbau gelenkig verbunden. Beide Lenker 18, 19 jedes Lenkerpaares 17 bilden eine Viergelenkanordnung (Parallelogramm).

In der Seitenansicht gesehen setzen sich beide Lenker 18, 19 entlang ihrer Längserstreckung aus mehreren winkelig aneinandergesetzten Abschnitten zusammen.

Der erste - in Schließstellung des Dachaufbaus 14 gesehen - vordere Lenker 18 umfaßt einen ersten, etwa horizontal ausgerichteten Abschnitt 24, einen zweiten schräg nach unten hinten verlaufenden Abschnitt 25, einen kurzen, sich in vertikaler Richtung erstreckenden dritten Abschnitt 26 und einen nach vorne gerichteten, sich ebenfalls in horizontaler Richtung erstreckenden vierten Abschnitt 27. Die einzelnen Abschnitte 24, 25, 26, 27 sind über gebogene Übergangsbereiche aneinander angeschlossen.

Der zweite, hintere Lenker 19, der am hinteren Ende des vorderen Dachelements 15 angreift, setzt sich aus drei winkelig aneinandergesetzten Abschnitten 28, 29, 30 zusammen, die in Schließstellung A des vorderen Dachelements 15 etwa gleichgerichtet zu den Abschnitten 24, 25, 26 des ersten Lenkers 18 verlaufen.

Die aufbauseitigen Anlenkpunkte 21 und 23 der Lenker 18, 19 sind in Fahrtrichtung gesehen hinter den Seitenholmen 9 des Überrollbügels 8 angeordnet und zwar verlaufen sie mit Abstand zueinander und unterhalb der Gürtellinie 13. Der Anlenkpunkt 21 des vorderen Lenkers 18 liegt dabei näher zum Seitenholm 9 als der dahinterliegende Anlenkpunkt 23. In seitlich außenliegenden Bereichen des querverlaufenden Abschnitts 10 sind an der Oberseite jeweils längsgerichtete Einprägungen 31 ausgebildet, wobei in Schließstellung des vorderen Dachelements 15 die beiden Lenker 18, 19 jedes Lenkerpaares 17 abschnittsweise an der Oberseite der Einprägungen 31 aufliegen.

Das großflächige hintere Dachelement 16 ist an seinem hinteren Endbereich oder an seitlichen Endbereichen über Scharniere 32 schwenkbar mit dem feststehenden Aufbau 2 verbunden und von einer geschlossenen Stellung C in eine angehobene Stellung D verlagerbar und umgekehrt. In angehobener Stellung D des hinteren Dachelements 16 ist das vordere Dachelement 15 mittels der Lenkpaare 17 von der Schließstellung A - über den Überrollbügel 8 hinweg - in die heckseitige Ablagestellung B bewegbar, in der sich das vordere Dachelement 15 in einem Aufnahmeraum 35 hinter den Sitzen 12 und unterhalb des hinteren Dachelements 16 befindet.

Im Ausführungsbeispiel ist der Überrollbügel 8 im Bereich seiner Seitenholme 9 über schrägverlaufende, nach hinten unten gerichtete C-Säulenabschnitte 33 zusätzlich am Aufbau 2 abgestützt, wodurch eine wesentliche Versteifung der Fahrzeugstruktur bei einem Überschlag erzielt wird. Die C-Säulenabschnitte 33 sind einstückig mit dem Überrollbügel 8 ausgebildet. In den freibleibenden Raum zwischen den C-Säulenabschnitten 33 und den Seitenholmen 9 des Überrollbügels 8 ist an jeder Längsseite eine Sichtscheibe 34 eingesetzt, die mittels eines Einfaßrahmens oder durch Kleben in Lage gehalten ist.

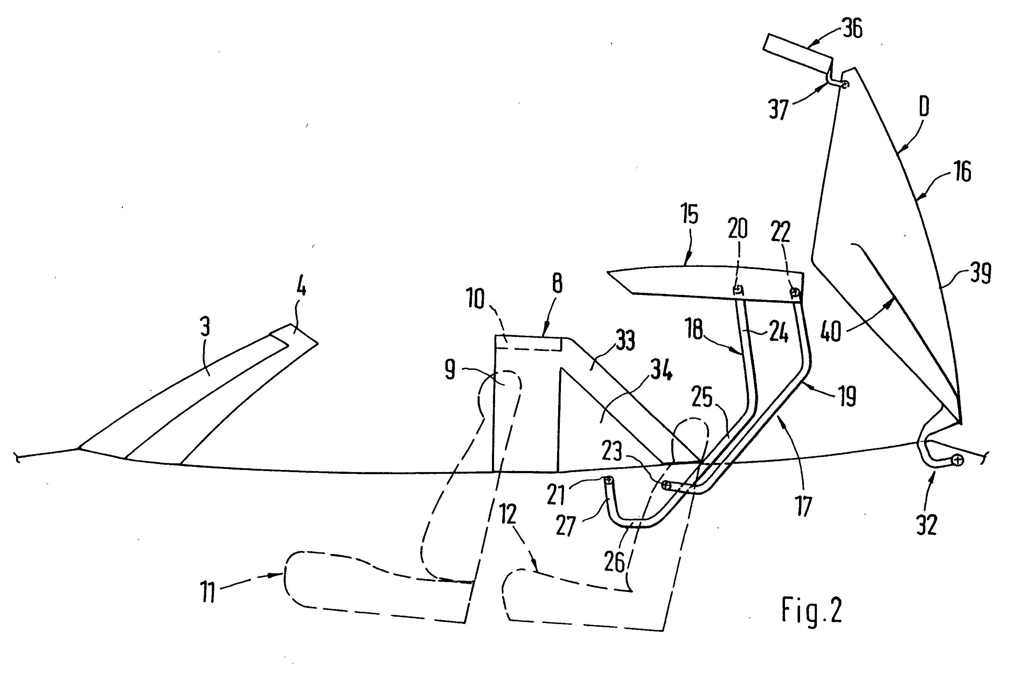

Das hintere Dachelement 16 ist gemäß Fig. 1 in seiner geschlossenen Stellung C an den querverlaufenden Abschnitt 10 des Überrollbügels 8 und in seitlich außenliegenden Bereichen an die obere Begrenzung der C-Säulenabschnitte 33 herangeführt. Das hintere Dachelement 16 ist gemäß einer ersten Ausführungsform an seinem dem Überrollbügel 8 zugekehrten Randbereich gelenkig mit einer vorgelagerten querverlaufenden Bügelabdeckung 36 verbunden. Die Bügelabdeckung 36 deckt den querverlaufenden oberen Bereich 10 des Überrollbügels 8 bei geschlossener Stellung C des hinteren Dachelements 16 ab und verläuft etwa außenhautbündig zum hinteren Dachelement 16 und/oder zum vorderen Dachelement 15. In Schließstellung A des vorderen Dachelements 15 werden außerdem die seitlich am Überrollbügel 8 aufliegenden Lenker 18, 19 des vorderen Dachelements 15 durch die Bügelabdeckung 36 nach oben hin abgedeckt. Die Bügelabdeckung 36 ist über Scharniere 37 mit dem angrenzenden Randbereich des hinteren Dachelements 16 verbunden und nimmt bei hochgestelltem hinteren Dachelement die in Fig. 2 dargestellte Position ein.

Das hintere Dachelement 16 umfaßt gemäß der in den Fig. 1 bis 3 dargestellten ersten Ausführungsform zumindest eine mit oder ohne Einfaßrahmen 38 versehene Heckscheibe 39. Ferner kann dem hinteren Dachelement 16 die vorgelagerte schwenkbare Bügelabdeckung 36 und eine innere Hutablage 40 zugeordnet sein.

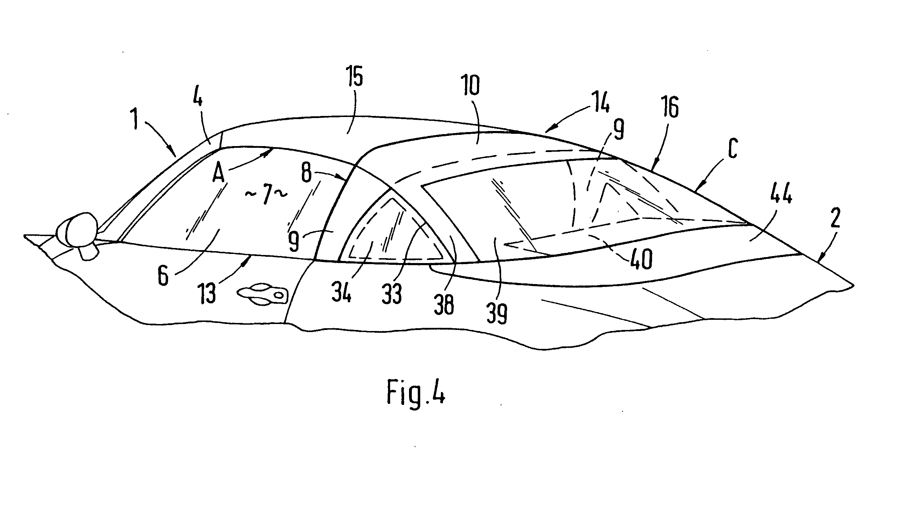

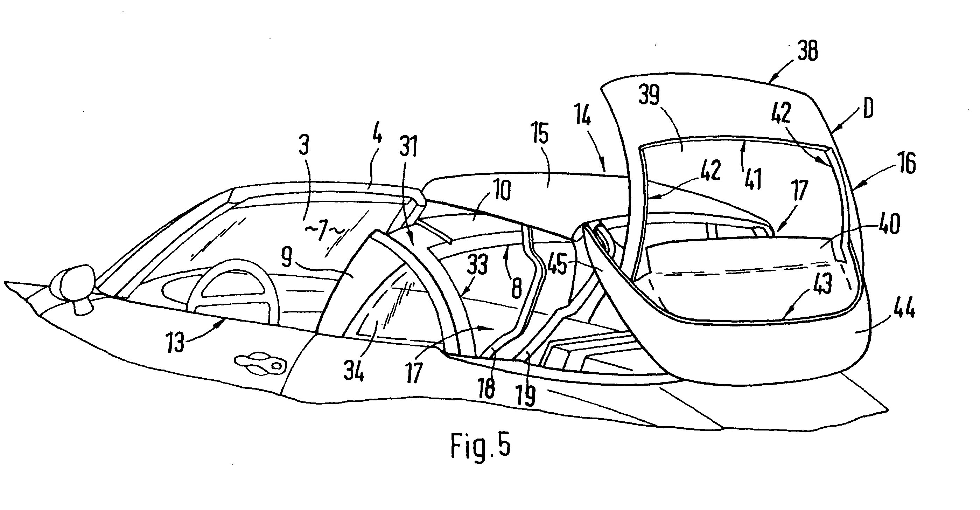

Die in den Fig. 4 bis 6 gezeigte zweite Ausführungsform des hinteren Dachlements 16 unterscheidet sich von der ersten Ausführungsform dadurch, daß auf eine vordere schwenkbare Bügelabdeckung 36 verzichtet wird und stattdessen der Einfaßrahmen 38 am oberen querverlaufenden Rand 41 der Heckscheibe 39 soweit nach vorne gezogen ist, daß er bei geschlossenem hinteren Dachelement 16 den oberen querverlaufenden Abschnitt 10 des Überrollbügels 8 vollständig abdeckt.

Die Heckscheibe 39 ist gemäß den Fig. 4 bis 6 am oberen Rand 41 und an den beiden seitlichen Rändern 42 vom Einfaßrahmen 38 umgeben. An den unteren Rand 43 der Heckscheibe 39 des Einfaßrahmens 38 ist ein Deckel, im Ausführungsbeispiel ein Verdeckkastendeckel 44, angeschlossen. Der Verdeckkastendeckel 44 ist in der Draufsicht gesehen etwa U-förmig ausgebildet, wobei die beiden Seitenschenkel 45 weiter nach vorne gezogen sind als die unteren Endbereiche des Einfaßrahmens 38. Einfaßrahmen 38, Heckscheibe 39, Verdeckkastendeckel 44 und die innenliegende Hutablage 40 bilden eine vorgefertigte Baueinheit. Am Verdeckkastendeckel 44 sind die Scharniere 32 zur Anlenkung des hinteren Dachelements 16 angebracht. Die unter der Heckscheibe 39 liegende Hutablage 40 dient zum Abdecken des darunterliegenden, abgelegten vorderen Dachelements 15.

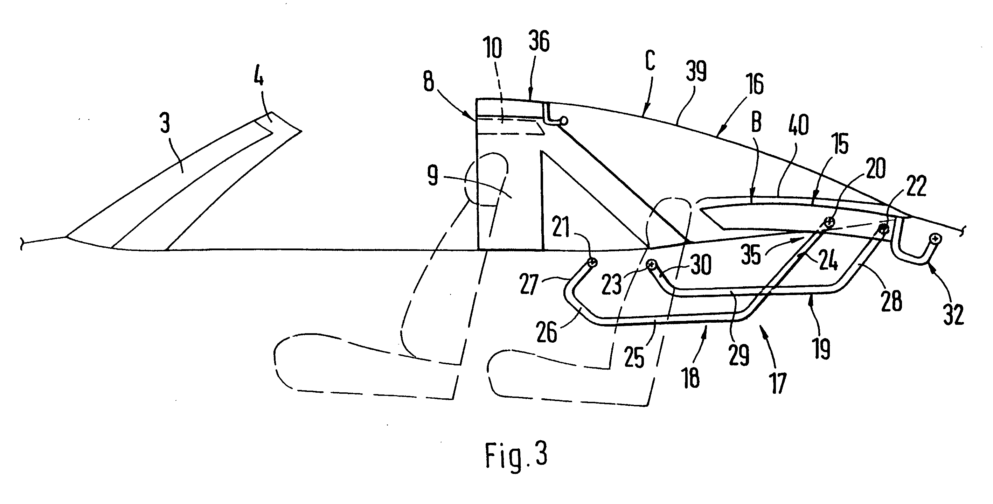

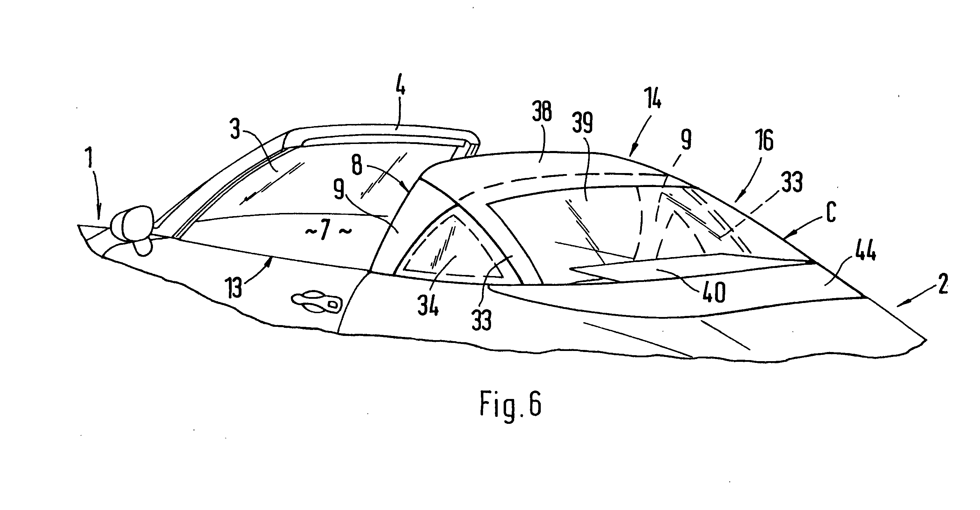

Die Bewegung des vorderen und hinteren Dachelements 15, 16 kann manuell oder vollautomatisch erfolgen. Bei zurückgeklapptem vorderen Dachelement 15 und geschlossenem hinteren Dachelement 16 nimmt der Personenkraftwagen 1 eine sogenannte "Targastellung" ein (Fig. 3 und 6).

## Patentansprüche

1. Dachaufbau (14) für Fahrzeuge, insbesondere Personenkraftwagen (11) mit einem oberhalb der vorderen Sitze angeordneten vorderen Dachelement (15), das von einer Schließstellung (A) in eine sich in einem heckseitigen Aufnahmeraum befindliche Ablagestellung (B) verlagerbar ist, wobei sich das vordere Dachelement (15) in seiner Schließstellung (A) zwischen einem Windschutzscheibenrahmen (4) und einem den Fahrgastraum (7) überspannenden Überrollbügel (8) erstreckt, und daß der Dachaufbau (14) ferner ein hinter dem Überrollbügel (8) angeordnetes hinteres Dachelement (16) umfaßt, das von einer geschlossenen Stellung (C) in eine angehobene Stellung (D) bewegbar ist, **dadurch gekennzeichnet, daß** das vordere Dachelement (15) an seinen beiden Längsseiten über je ein Lenkerpaar (17) drehbar am darunterliegenden Aufbau (2) des Fahrzeugs angefenkt ist und zwar - in Fahrtrichtung gesehen - hinter dem Überrollbügel (8), und daß in angehobener Stellung (D) des an seinem hinteren oder seitlichen Endbereich über Scharniere (32) schwenkbar am darunterliegenden Aufbau (2) gelagerten hinteren Dachelements (16) das vordere Dachelement (15) durch Zurückschwenken über den Überrollbügel (8) hinweg in die heckseitige Ablagestellung (B) verlagerbar ist.

2. Dachaufbau nach Anspruch 1, **dadurch gekennzeichnet, daß** die beiden Lenker (18, 19) jedes Lenkerpaares (17) in Schließstellung (A) des vorderen Dachelements (15) abschnittsweise an der Oberseite des Überrollbügels (8) aufliegen.

3. Dachaufbau nach Anspruch 1, **dadurch gekennzeichnet, daß** der Überrollbügel (8) im Bereich seiner beiden aufrechten Seitenholme (9) über schrägverlaufende, nach hinten gerichtete C-Säulenabschnitte (33) am Aufbau (2) abgestützt ist, wobei der freibleibende Raum zwischen den C-Säulenabschnitten (33) und den aufrechten Seitenholmen (9) des Überrollbügels (8) nach außen hin durch Sichtscheiben (34) abgedeckt ist.

4. Dachaufbau nach den Ansprüchen 1 und 3, **dadurch gekennzeichnet, daß** das hintere Dachelement (16) in seiner geschlossenen Stellung (C) an einen querverlaufenden Abschnitt (10) des Überrollbügels (8) und in seitlich außenliegenden Bereichen an die obere Begrenzung der C-Säulenabschnitte (33) herangeführt ist.

5. Dachaufbau nach einem oder mehreren der vorangegangenen Ansprüche, **dadurch gekennzeichnet, daß** das hintere Dachelement (16) an seinem dem Überrollbügel (8) zugekehrten Randbereich gelenkig mit einer vorgelagerten, querverlaufenden Bügelabdeckung (36) verbunden ist.

6. Dachaufbau nach Anspruch 5, **dadurch gekennzeichnet, daß** die Bügelabdeckung (36) den querverlaufenden, oberen Bereich (10) des Überrollbügels (8) bei geschlossener Stellung (C) des hinteren Dachelements (16) abdeckt.

7. Dachaufbau nach den Ansprüchen 5 und 6, **dadurch gekennzeichnet, daß** die Bügelabdeckung (36) außenhautbündig zum hinteren Dachelement (16) und/oder zum vorderen Dachelement (15) verläuft.

8. Dachaufbau nach einem oder mehreren der vorangegangenen Ansprüche, **dadurch gekennzeichnet, daß** die Bügelabdeckung (36) in Schließstellung des vorderen Dachelements (15) die am Überrollbügel (8) aufliegenden Lenker (18, 19) nach oben hin abdeckt.

9. Dachaufbau nach einem oder mehreren der vorangegangenen Ansprüche, **dadurch gekennzeichnet, daß** das hintere Dachelement (16) eine mit einem Einfaßrahmen (38) versehene Heckscheibe (39), eine vorgelagerte schwenkbare Bügelabdeckung (36) und eine unter der Heckscheibe (39) liegende Hutablage (40) umfaßt.

10. Dachaufbau nach einem oder mehreren der vorangegangenen Ansprüche, **dadurch gekennzeichnet, daß** das hintere Dachelement (16) eine Heckscheibe (39) und einen fest mit dem unteren Rand (43) der Heckscheibe (39) verbundenen Verdeckkastendeckel (44) umfaßt.

11. Dachaufbau nach Anspruch 10, **dadurch gekennzeichnet, daß** die Heckscheibe (39) am oberen und an den beiden seitlichen Rändern (41, 42) von einem Einfaßrahmen (38) umgeben ist, wobei der Einfaßrahmen (38) im oberen Bereich so weit nach vorne gezogen ist, daß er bei geschlossenem hinteren Dachelement (16) etwa bündig mit der vorderen Begrenzung des Überrollbügels (8) abschließt.

12. Dachaufbau nach den Ansprüchen 1 und 2, **dadurch gekennzeichnet, daß** die beiden - in der Seitenansicht gesehen - abgewinkelten Lenker (18, 19) jedes Lenkerpaares (17) einerseits mit einem hinteren Bereich des vorderen Dachelements (15) und andererseits mit dem feststehenden Aufbau (2) drehbar verbunden sind.

## Claims

1. Roof structure for vehicles, in particular passenger cars, having a front roof element which is arranged above the front seats and can be shifted from a closing position into a storage position located in a rear end receiving space, the front roof element, in its closing position, extending between a windscreen frame and a roll bar spanning the passenger compartment, and the roof structure further comprising a rear roof element which is arranged behind the roll bar and can be moved from a closed position into a raised position, **characterized in that** the front roof element (15) is coupled at its two longitudinal sides rotatably to the structure (2) lying beneath it via a respective pair (17) of guide rods, specifically - as seen in the direction of travel - behind the roll bar (8), and **in that** in the raised position (D) of the rear roof element (16), which is mounted at its rear or lateral end region pivotably to the structure (2) via hinges (32), the front roof element (15) can be shifted into the rear end storage position (B) by being pivoted back beyond the roll bar (8).

2. Roof structure according to Claim 1, **characterized in that**, in the closing position (A) of the front roof element (15), parts of the two guide rods (18, 19) of each pair (17) of guide rods rest on the upper side of the roll bar (8).

3. Roof structure according to Claim 1, **characterized in that** the roll bar (8) is supported in the region of its two upright side struts (9) on the structure (2) via C-pillar sections (33) which run obliquely and are directed rearwards, the space remaining free between the C-pillar sections (33) and the upright side struts (9) of the roll bar (8) being covered to the outside by windows (34).

4. Roof structure according to Claims 1 and 3,
**characterized in that**, in its closed position (C), the rear roof element (16) is brought up to a transversely running section (10) of the roll bar (8) and, in laterally external regions, is brought up to the upper boundary of the C-pillar sections (33).

5. Roof structure according to one or more of the preceding claims, **characterized in that**, at its edge region facing the roll bar (8), the rear roof element (16) is connected in an articulated manner to a roll bar covering (36) which is mounted upstream and runs transversely.

6. Roof structure according to Claim 5, **characterized in that** the roll bar covering (36) covers the transversely running, upper region (10) of the roll bar (8) in the closed position (C) of the rear roof element (16).

7. Roof structure according to Claims 5 and 6,
**characterized in that** the roll bar covering (36) runs in a manner such that its outer skin is flush with the rear roof element (16) and/or with the front roof element (15).

8. Roof structure according to one or more of the preceding claims, **characterized in that**, in the closing position of the front roof element (15), the roll bar covering (36) upwardly covers the guide rods (18, 19) resting on the roll bar (8).

9. Roof structure according to one or more of the preceding claims, **characterized in that** the rear roof element (16) comprises a rear window (39) provided with a mounting frame (38), a pivotable roll bar covering (36) mounted in front of it and a rear parcel shelf (40) lying below the rear window (39).

10. Roof structure according to one or more of the preceding claims, **characterized in that** the rear roof element (16) comprises a rear window (39) and a folding-top compartment lid (44) connected fixedly to the lower edge (43) of the rear window (39).

11. Roof structure according to Claim 10, **characterized in that** the rear window (39) is surrounded at the upper and at the two lateral edges (41, 42) by a mounting frame (38), the mounding frame (38) being pulled forwards in the upper region to a sufficient extent that it ends approximately flush with the upper boundary of the roll bar (8) when the rear roof element (16) is closed.

12. Roof structure according to Claims 1 and 2, **characterized in that** the two angled - as seen in side view - guide rods (18, 19) of each pair (17) of guide rods are connected rotatably at one end to a rear region of the front roof element (15) and at the other end to the fixed structure (2).

## Revendications

1. Structure de toit pour des véhicules, en particulier des voitures particulières, avec un élément de toit antérieur disposé au-dessus des sièges avant, qui peut être déplacé d'une position fermée à une position de rangement dans un espace de rangement situé à l'arrière, dans laquelle l'élément de toit antérieur s'étend, dans sa position fermée, entre un cadre de pare-brise et un arceau de sécurité enjambant l'habitacle, et que la structure de toit comprend en outre un élément de toit postérieur disposé derrière l'arceau de sécurité, qui peut être déplacé d'une position fermée à une position relevée, **caractérisée en ce que** l'élément de toit antérieur (15) est articulé de façon pivotante sur chacun de ses deux côtés longitudinaux à la structure sous-jacente (2) par une paire de bras (17) à savoir - en regardant dans le sens de la marche - derrière l'arceau de sécurité (8), et **en ce qu'**en position relevée (D) de l'élément de toit postérieur (16) articulé de façon pivotante à la structure (2) par des charnières (32) dans sa région d'extrémité arrière ou latérale, l'élément de toit antérieur (15) peut être amené dans sa position de rangement arrière (B) par un basculement par-dessus l'arceau de sécurité (8).

2. Structure de toit suivant la revendication 1,
**caractérisée en ce que** les deux bras (18, 19) de chaque paire de bras (17) reposent, par un segment, sur la face supérieure de l'arceau de sécurité (8), dans la position fermée (A) de l'élément de toit antérieur (15).

3. Structure de toit suivant la revendication 1, **caractérisée en ce que** l'arceau de sécurité (8) est appuyé sur la structure (2) dans la région de ses deux longerons latéraux verticaux (9) par des segments de colonnes C (33) orientés en oblique vers l'arrière, l'espace resté libre entre les segments de colonnes C (33) et les longerons latéraux verticaux (9) de l'arceau de sécurité (8) étant fermé vers l'extérieur par des vitres transparentes (34).

4. Structure de toit suivant les revendications 1 et 3, **caractérisée en ce que**, dans sa position fermée (C), l'élément de toit postérieur (16) est posé sur un segment transversal (10) de l'arceau de sécurité (8) et dans des régions latéralement extérieures sur la face supérieure des segments de colonnes C (33).

5. Structure de toit suivant une ou plusieurs des revendications précédentes, **caractérisée en ce que** l'élément de toit postérieur (16) est assemblé de façon articulée, dans sa région de bord tournée vers l'arceau de sécurité (8), à un recouvrement (36) de l'arceau de sécurité disposé transversalement à l'avant.

6. Structure de toit suivant la revendication 5, **caractérisée en ce que** le recouvrement d'arceau (36) masque la région supérieure transversale (10) de l'arceau de sécurité (8) lorsque l'élément de toit postérieur (16) est en position fermée (C).

7. Structure de toit suivant les revendications 5 et 6, **caractérisée en ce que** le recouvrement d'arceau (36) se place extérieurement à fleur de l'élément de toit postérieur (16) et/ou de l'élément de toit antérieur (15).

8. Structure de toit suivant une ou plusieurs des revendications précédentes, **caractérisée en ce que** le recouvrement d'arceau (36) masque les bras (18, 19) reposant sur l'arceau de sécurité (8), lorsque l'élément de toit antérieur (15) est en position fermée.

9. Structure de toit suivant une ou plusieurs des revendications précédentes, **caractérisée en ce que** l'élément de toit postérieur (16) comprend une lunette arrière (39) pourvue d'un cadre de fixation (38), un recouvrement d'arceau (36) pivotant à l'avant et un plateau (40) situé sous la lunette arrière (39).

10. Structure de toit suivant une ou plusieurs des revendications précédentes, **caractérisée en ce que** l'élément de toit postérieur (16) comprend une lunette arrière (39) et un couvercle de masque du coffre (44) fixé au bord inférieur (43) de la lunette arrière (39).

11. Structure de toit suivant la revendication 10, **caractérisée en ce que** la lunette arrière (39) est entourée par un cadre de fixation (38) sur son bord supérieur et ses deux bords latéraux (41, 42), le cadre de fixation (38) se prolongeant dans la région supérieure jusqu'à ce qu'il se raccorde sensiblement à fleur avec la face avant de l'arceau de sécurité (8) lorsque l'élément de toit postérieur (16) est fermé.

12. Structure de toit suivant les revendications 1 et 2, **caractérisée en ce que** - considérés en vue latérale - les deux bras coudés (18, 19) de chaque paire de bras (17) sont assemblés de façon rotative d'une part à une région arrière de l'élément de toit antérieur (15) et d'autre part à la structure fixe (2).
